(19) Europäisches Patentamt
European Patent Office
Office européen des brevets

(11) Veröffentlichungsnummer: **0 193 739**
**B1**

(12) **EUROPÄISCHE PATENTSCHRIFT**

(45) Veröffentlichungstag der Patentschrift: **15.02.89**

(51) Int. Cl.[4]: **C 07 F 7/18**, C 07 F 9/10

(21) Anmeldenummer: **86101350.6**

(22) Anmeldetag: **03.02.86**

# (54) Verfahren zur Herstellung von Amidosilanen.

(30) Priorität: **12.02.85 DE 3504644**

(43) Veröffentlichungstag der Anmeldung: **10.09.86 Patentblatt 86/37**

(45) Bekanntmachung des Hinweises auf die Patenterteilung: **15.02.89 Patentblatt 89/7**

(84) Benannte Vertragsstaaten: **BE DE FR GB IT NL**

(56) Entgegenhaltungen:
**US-A-3 776 933**

**CHEMICAL ABSTRACTS, Band 71, Nr. 9, 1. September 1969, Seite 310, Nr. 39069v, Columbus, Ohio, US; L.K. MASLII et al.: "Silicon-containing amides. IV. Reaction of sodium ethylacetamide with methyldialkoxychloremethylsilanes" & ZH. OBSHCH. KHIM. 1968, 38(11), 2582-5**
**Elias H.G., "Makromoleküle: Struktur und Eigenschaffen", ISBN 3-7785-0677-3, Seite 903**

(73) Patentinhaber: **BAYER AG, Konzernverwaltung RP Patentabteilung, D-5090 Leverkusen 1 Bayerwerk (DE)**

(72) Erfinder: **Endres, Robert, Dr., Kalmüntener Strasse 8, D-5060 Begisch- Gladbach 2 (DE)**
Erfinder: **De Montigny, Armand, Dr., Walter- Flex-Strasse 17, D-5090 Leverkusen 1 (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die vorliegende Erfindung betrifft ein Verfahren zur Herstellung von Amidosilanen. Diese Verbindungen wurden bisher aus Organochlorsilanen und einer vorgelegten Lösung organischer Amide und einem tertiären Amin zum Abfangen der freigesetzten Salzsäure hergestellt, wie es z. B. in den Patentschriften US-PS-2 876 234, US-PS-3 488 371 und DE-AS-1 224 039 beschrieben wird. Dieses Verfahren führt oft zu Amidosilanen, die nach Abzug des Lösungsmittels noch so verunreinigt sind, daß aie durch Destillation oder Dünnschichtung gereinigt werden müssen. Darüber hinaus entstehen große Mengen von Trialkylammoniumsalzen, deren Verarbeitung und Entsorgung ebenfalls aufwendig ist.

Nach US-PS-3 776 933 und DE-AS-2 319 818 können Amidosilane auch aus den Alkalisalzen der organischen Amide und Organohalogensilanen erhalten werden, wenn man Alkalimetalle wie Natrium fein zerteilt in Toluol am Rückfluß erhitzt und überschüssiges Säureamid damit umsetzt, wobei Wasserstoff gebildet wird. Dieses Verfahren hat den Nachteil, daß die Verwendung von Natrium technisch aufwendig ist und daß die Bildung des metallierten Säureamids langwierig und unter thermischer Belastung des Säureamids erfolgt.

So können irreversibel aus $Ar-\overset{\overset{O}{\|}}{C}-NHR$ beim Erhitzen in Toluol N-Benzoylbenzamidin, gebildet werden und zwangsläufig zu Produktverunreinigungen führen.

Der Einsatz von Alkalimetall hat außerdem den Nachteil, daß aus Sicherheitsgründen selbst die geringsten unumgesetzten Metallreste vor der weiteren Verarbeitung der Reaktionsmischung vollständig entfernt werden müssen.

Aufgabe der vorliegenden Erfindung war es, die genannten Nachteile zu beseitigen.

Gegenstand der Erfindung ist ein Verfahren zur Herstellung von Amidosilanen der allgemeinen Formel

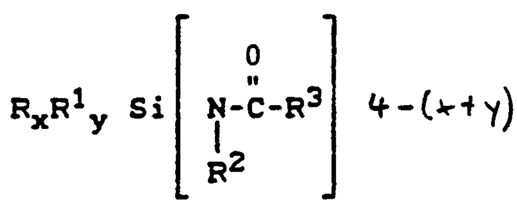

wobei

R ein Alkyl-, Cycloalkyl-, Alkenyl- oder Arylrest mit 1 - 18 C-Atomen,

$R^1$ ein Alkoxyrest mit 1 - 18 C-Atomen

$R^2$ und $R^3$ unabhängig voneinander Alkylreste mit 1 - 3 C-Atome, Arylreste oder $R^2$ und $R^3$ bilden zusammen eine, Cyclus und

$x = 1, 2$ oder 3;

$y = 0, 1$ oder 2;

$x + y \leq 3$,

durch Umsetzung von Suspensionen von Alkalisalzen organischer Amide der Formel

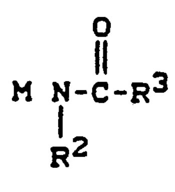

(M = Alkalimetallrest)

und Organosilanen des Typs

$R_xR_y{}^1\ Si\ X_{4-(x+y)}$ (X = Cl, Br, J Carboxylate, x und y wie oben)

wobei die Umsetzung unter Ausschluß von Feuchtigkeit in inerten organischen Lösungsmitteln erfolgt, welches dadurch gekennzeichnet ist,

daß die Alkalisalze der organischen Amide durch Umsetzung der entsprechenden Amid-Lösungen in inerten organischen Lösungsmitteln mit alkoholischen Alkalialkoholatlösungen hergestellt werden, wobei der Alkohol aus dem Reaktionsgemisch quantitativ abdestilliert wird.

R der Amidosilanformel kann ein aliphatischer Rest von $C_1$ bis $C_{18}$ ein, ein cycloaliphatischer, aromatischer oder olefinischer Rest und Substitutionsprodukte dieser Reste, die unter den genannten Reaktionsbedingungen nicht mit Alkalialkoholatlösungen reagieren. Bevorzugt ist R = Methyl.

$R^1$ ist eine Alkoxygruppe von $C_1$ bis $C_{18}$. Bevorzugt ist $R^1$ = Ethoxy.

$R^2$ und $R^3$ sind Alkylgruppen von $C_1$ bis $C_3$ und/oder Aromaten und deren Substitutionsprodukte, die nicht mit Alkalialkoholatlösungen unter den erwähnten Bedingungen reagieren. $R^2$ und $R^3$ können auch zusammen

einen Cyclus bilden (Lactame). Bevorzugt sind $R^2$ bzw. $R^3$ = Methyl, Ethyl und Phenyl.

M ist ein Alkalimetall, wobei aus wirtschaftlichen Gründen Natrium besonders bevorzugt wird.

X ist Cl, Br oder J, sowie ein Carboxylat, bevorzugt Acetat oder Propionat.

Als Lösungsmittel für die Säureamide eignen sich besonders höher siedende Substanzen, im Vergleich zu den verwendeten Alkoholen, die gegenüber den Alkalialkoholaten inert sind, wie z. B. Toluol, Xylol, Di-n-Propylether, n-Octan.

Besonders bevorzugt wird Toluol - wegen seines guten Lösungsvermögens für organische Säureamide - eingesetzt.

Als Lösungsmittel für die Alkoholate kommen insbesondere Methanol, Ethanol und i-Propanol in Betracht. Dabei ist es vorteilhaft, das dem jeweiligen Alkoholat entsprechende Lösungsmittel (Alkohol) einzusetzen. In der folgenden Tabelle sind die Siedepunktunterschiede und die azeotropen Kenndaten dieser binären Systeme aufgelistet:

| Alkohol (Kp) | Lösungsmittel als 2. Komponente (Kp) | Binäres (Kp) | Azeotrop Anteil der 2. Komponente |
|---|---|---|---|
| Methanol (64,7°C) | Toluol | 63,8°C (110,8°C) | 31 G.-% |
| " | Di-n-Propylether (90,4°C) | 63,8°C | 28 G.-% |
| " | n-Octan (124,8°C) | 62,8°C | 32,5 G.-% |
| Ethanol (78,3°C) | Toluol (110,8°C) | 76,7°C | 32 G.-% |
| " | Di-n-Propylether (90,4°C) | 74,4°C | 56 G.-% |
| " | n-Octan (124,8°C) | 77,0°C | 22 G.-% |
| i-Propanol (82,5°C) | Toluol (110,8°C) | 81,3°C | 21 G.-% |
| | n-Octan (124,8°C) | 81,6°C | 16 G.-% |

Das ideale Lösungsmittel-System für die Metallierung der organischen Säureamide ist Toluol (gute Lösungseigenschaften, keine Peroxidbildung im Vergleich zu den Ethern) und Methanol (preiswerte, handelsübliche 30 gew.-%-ige methanolische Natriummethanolatlösung). Die Siedepunktsdifferenz beträgt für dieses System 46,1°C bei Normaldruck; der azeotrope Punkt liegt bei 63,8°C und 31 Gew.-% Toluol, d. h. das Azeotrop ist mit 69 Gew.-% der leichter flüchtigen Komponente Methanol angereichert. Eine quantitative Entfernung von Methanol (Methanol $< 0{,}1$ Gew.-% in der Restlösung) ist nötig, um für die Folgeumsetzung mit den Organosilanen die Bildung von unerwünschten Methoxysilanen zu verhindern. Da bei Normaldruck die Kolonnenkopftemperatur auf 110,8°C und die Sumpftemperatur auf ca. 130 bis 150°C steigt, empfiehlt sich wegen der bereits erwähnten Temperaturempfindlichkeit der organischen, insbesondere der aromatischen säureamide unter Bildung von N-Benzoyl benzamidinen bzw. analoger substituierter Derivate, eine Temperaturabsenkung im Sumpf auf 60 bis 70°C. Das wird durch Druckreduzierung erreicht.

Um ein zu weites Absinken der Kondensationstemperatur des Destillats zu vermeiden, empfiehlt es sich, den Druck so zu wählen, daß die Temperatur nicht unter 60°C abfällt.

Falls nach der Entfernung des Azeotrops und der Entfernung der höher siedenden Komponente die zurückbleibende Alkalialkoholatsuspension zu dickflüssig wird, kann weitere wasserfreie höher siedende Komponente zugefügt werden. Die Rührgeschwindigkeit wird so bemessen, daß die Mischung homogen bleibt.

Die Zugabe des Organohalogensilans in der 2. Stufe hat eine exotherme Reaktion zur Folge. Damit die bevorzugte Temperatur von 60 bis 80°C für die Bildung der Amidosilane eingehalten wird, muß gegebenenfalls gekühlt werden.

Die Reaktionszeit liegt zwischen 1 und 12 Stunden, wobei 3 bis 5 Stunden bevorzugt werden und bei guter Durchmischung für eine quantitative Umsetzung ausreichen.

Als Organosilane werden wegen der guten Verfügbarkeit und aus wirtschaftlichen Gründen Organochlorsilane

$$R_xR_y^1SiCl_{4-(x+y)}$$

eingesetzt.

Naturgemäß darf $x + y$ höchstens 3 betragen. Für $x = 2$ und $y = 0$ oder 1 resultieren Kettenverlängerer des Typs

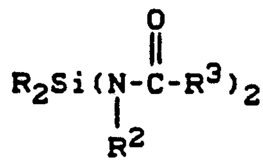 und 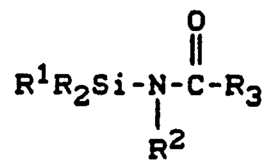

wobei
R ein Alkyl-, Cycloalkyl-, Alkenyl- oder Arylrest,
$R^1$ ein Alkoxyrest,
$R^2$ und $R^3$ = unabhängig voneinander Alkyl-, bzw. Arylreste bedeuten,
die in der Regel die Bruchdehnung von gummielastischen Organopolysiloxanmassen erhöhen.
Für die Fälle x = 1 und y = 0 bis 2 erhält man Vernetzer des Typs

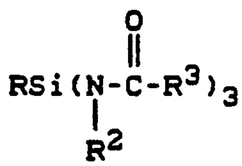, 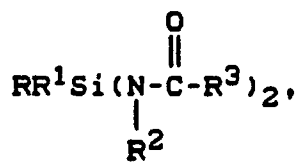, 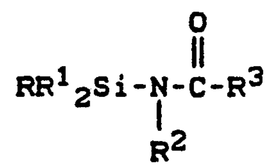,

mit denen Organopolysiloxanform- und -dichtungsmassen hergestellt werden können.

Für den Fall y = 0; x = 3 erhält man Silane, die die Kettenlänge von Polymeren regulieren.

Die nach dem beanspruchten Verfahren synthetisierten Amidosilane liegen nach der Abfiltration des Alkalihalogenides im Lösungsmittel vor, das wegen der Temperaturempfindlichkeit der Endprodukte schonend im Vakuum abgezogen wird.

Das vorliegende, erfindungsgemäße Verfahren hat den Vorteil, daß die Endprodukte nach Abzug des Lösungsmittels so rein anfallen, daß eine Produktdestillation als Reinigungsverfahren nicht mehr notwendig ist und überhaupt erst eine ökonomische Herstellung thermisch empfindlicher Amidosilane möglich ist.

Die folgenden Beispiele sollen die Erfindung verdeutlichen.

**Beispiel 1:** Di-(N-ethylacetamido)-methylethoxysilan

In einem vakuumdichten 5-l-Rührgefäß mit aufgesetzter Füllkörperkolonne (1000 x 60 mm, 8 mm Berl-Sättel), Intensivkühler, Stickstofflüberlagerung und Vakuumwechselvorlage wurden 176 g N-Ethylacetamid (99-%-ig, 2 Mol) in 2000 g wasserfreiem Toluol gelöst und bei Raumtemperatur 423,5 g methanolische Natriummethanolatlösung (25,5-%-ig, 2 Mol) unter Rühren und Feuchtigkeitsausschluß zugegeben. Dabei entstand eine weiße Suspension, aus der das Azeotrop Methanol/Toluol bei 64°C Kopftemperatur und Normaldruck unter Rühren abdestilliert wurde. Nach vollständiger Entfernung von Methanol (110,8°C Kopftemperatur, GC-Kontrolle) wurde die Suspension auf ca. 50°C abgekühlt und unter Rühren und Kühlen 157 g Methylethoxydichlorsilan (99,3-%-ig, 0,98 Mol) so zugetropft, daß die Sumpftemperatur 70°C nicht überschritt; anschließend wurde 3 h bei 70°C gerührt. Nach dem Abkühlen auf Raumtemperatur filtrierte man die Suspension unter Feuchtigkeitsausschluß (Seitz-Drucknutsche, 4 bar $N_2$, Filtereinsätz K 300) und wusch mit 2-mal 400 g wasserfreiem Toluol nach. Das Lösungsmittel wurde bei 10 mbar abgezogen und man erhielt 233,8 g einer hellgelben, öligen Flüssigkeit bei einer Ausbeute von 97,6 %.

Von der erhaltenen Substanz und den Produkten der folgenden Beispiele wurden jeweils ca. 20-%-ige Lösungen in $CDCl_3$ hergestellt.

Chemische Verschiebung δ (ppm), bezogen auf TMS, im $^1H$-NMR:

a = 0,53, b = 1,17, c = 2,07, d = 3,27, e = 3,83

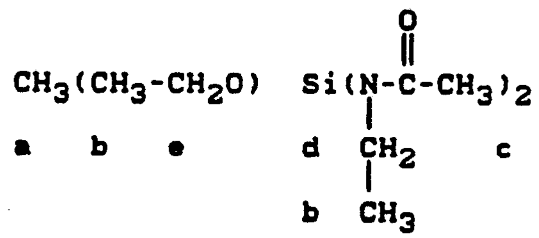

**Beispiel 2** Di-(N-methylpropionamido)-methylethoxysilan

In der gleichen Apparatur wie nach beispiel 1 wurden 174 9 g N-Methylpropionamid (99,6-%-ig, 2 Mol) in 2500 g wasserfreiem Toluol gelöst und bei Raumtemperatur 423,5 g methanolische Natriummethanolatlösung (25,5-%-ig, 2 Mol) zugegeben. Nach vollständiger Entfernung des Methanols wie in Beispiel 1 und analoger Umsetzung mit 157 g Methylethoxydichlorsilan (99,3-%-ig, 0,98 Mol) wurden nach der Abfiltration und Nachwäsche des Filterkuchens sowie Abdestillation des Lösungsmittels 239,8 g einer hellgelben, öligen Flüssigkeit mit einer Ausbeute von 98,1 % erhalten.
$^1$H-NMR (δ in ppm, bezogen auf TMS):

a = 0,33, b = 1,20, c = 2,33, d = 2,83, e = 3,77

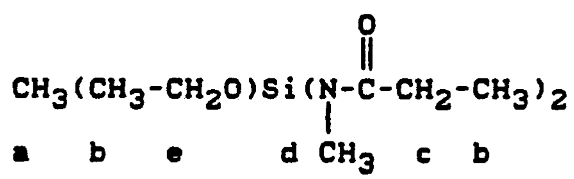

**Beispiel 3** N-Methylacetamidomethyldiethoxysilan

In der Apparatur nach Beispiel 1 wurden 183,4 g N-Methylacetamid (99,5-%-ig, 2,5 Mol) in 1,5 kg wasserfreiem Toluol vorgelegt und bei Raumtemperatur 532,5 g Natriummethanolatlösung (25,5-%-ig, 2,5 Mol) zugegeben. Nach quantitativer Entfernung des Methanols wie in den vorangegangenen Beispielen wurden 434 g Methyldiethoxychlorsilan unter Rühren zugetropft (97,1-%-ig, 2,5 Mol) und weiter analog Beispiel 1 verfahren. Man erhielt 499,7 g einer hellgelben, öligen Flüssigkeit mit einer Ausbeute von 97,5 %.
$^1$H-NMR (δ in ppm, bezogen auf TMS):

a = 0,33, b = 1,20, c = 2,07, d = 2,80, e = 3,80

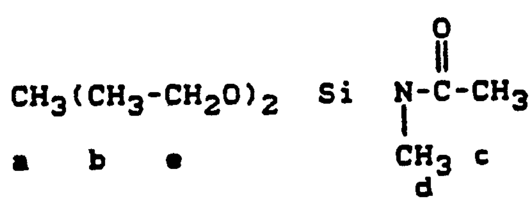

**Beispiel 4** N-Phenylacetamidomethyldiethoxysilan

In der Apparatur nach Beispiel 1 wurden 338,9 g N-Phenylacetamid (99,7-%-ig, 2,5 Mol) in 1,5 kg waserfreiem Toluol gelöst und bei Raumtemperatur 829,3 g Natriumethanolatlösung (20,5-%-ig, 2,5 Mol) zulaufen lassen. Das Azeotrop Ethanol/Toluol wurde bei 77°C Kopftemperatur unter Rühren abdestilliert. Nach vollständiger Entfernung des Ethanols (110,8°C Kopftemperatur, GC-Kontrolle) wurde auf ca. 50°C Sumpftemperatur abgekühlt und 434 g Methyldiethoxychlorsilan unter Rühren zugetropft (97,1-%-ig, 2,5 Mol) und 2 h bei 60°C gerüht. Nach Abkühlung und Filtration wurde mit zwei mal 500 g Toluol nachgewaschen und aus dem Filtrat das Lösungsmittel abgezogen. Es wurde eine helle ölige Flüssigkeit mit einer Ausbeute von 96,7 % erhalten (646 g).

Chemische Analyse von N-Phenylacetamidomethyldiethoxysilan:

| | % C | % H | % N | % Si |
|---|---|---|---|---|
| Gefunden: | 58,4 | 8,1 | 5,8 | 10,5 |
| Errechnet: | 58,5 | 7,9 | 5,2 | 10,5 |

**Beispiel 5** Tri-(N-methylacetamido)-methylsilan

In einer Apparatur nach Beispiel 1 wurden 132 g N-Methylacetamid (99,5-%-ig, 1,8 Mol) in 1,5 kg Toluol gelöst und 380 g Natriummethanolatlösung (25,5-%-ig, 1,8 Mol) zugegeben. Nach der azeotropen Abdestillation des Methanols wurden zur 60°C warmen Suspension 90 g Methyltrichlorsilan (99,4-%, 0,6 Mol) innerhalb 30 Minuten zugetropft und die Suspension 3 h bei 70°C gerührt. Nach dem Abkühlen wurde die Mischung analog Beispiel 1 aufgearbeitet. Es resultierte eine hellgelbe, ölige Flüssigkeit, die bei Raumtemperatur kristallisierte, mit einer Ausbeute von 95 % entsprechend 147,6 g Produkt.

Chemische Verschiebung δ (ppm) im $^1$H-NMR, bezogen auf TMS:

a = 0,53, b = 2,00, c = 2,67

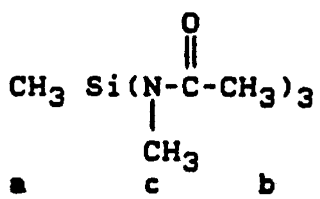

Die Amidosilane nach den Beispielen 1 bis 5 wurden jeweils in folgende Dichtstoffrezeptur als Vernetzer eingesetzt:

| | |
|---|---|
| 61,5 Gew.-Teile | Hydroxylendgestopptes Polydimethylsiloxan, Viskosität ca. 50 000 mPas (25°C) |
| 24 1 Gew.-Teile | Nicht reaktives Polydimethyl-Siloxan. Viskosität ca. 2500 mPas (25°C) |
| 4,0 Gew.-Teile | Vernetzer |
| 9,5 Gew.-Teile | Aerosil 130 CF (Handelsprodukt der Fa. Degussa) |
| 0,01 Gew.-Teile | Dibutylzinndiacetat |

Beim Kontakt mit Luftfeuchtigkeit resultierte jeweils ein mäßig transparenter, durchgehärteter und gummielastischer Dichtstoff.

**Beispiel 6** Di-(N-methylbenzamido)-methylethoxysilan

In einer Apparatur nach Beispiel 1 wurden 405,5 g N-Methylbenzamid (3 Mol) in 2400 g wasserfreiem Toluol bei 65°C gelöst und 642,2 g Natriummethanolatlösung (25,24-%-ig) zufließen lassen. Das Azeotrop Methanol/Toluol wurde bei reduziertem Druck (450 bis 180 mbar) und einer Kopftemperatur zwischen 35 bis 50°C so abdestilliert, daß die Sumpftemperatur zwischen 60 - 65°C lag. Nach einem Temperatursprung von ca. 10°C wurden bei weiterhin konstanter Sumpftemperatur noch ca. 100 g Destillat abgenommen, bis kein Methanol mehr nachweisbar war (GC-Kontrolle). Danach wurden 238,7 g Methylethoxydichlorsilan (99-%-ig, 1,485 Mol) zugetropft und dabei so gekühlt, daß die Sumpftemperatur 70°C nicht überstieg, anschließend wurde 3 h bei dieser Temperatur nachgerührt.

Die Suspension wurde wie in Beispiel 1 aufgearbeitet. Man erhielt 503 g einer schwach gelblichen, öligen Flüssigkeit (95 % Ausbeute).

$^1$H-NMR (δ in ppm, bezogen auf TMS):

a = 0,47, b = 1,20, c = 2,87, d = 3,87, e = 7,27, f = 7,73

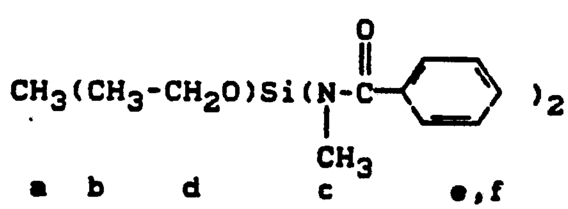

**Beispiel 7** N-Methylbenzamidomethyldiethoxysilan

In einer Rühr- und Destillationsapparatur nach Beispiel 1 wurden 202,8 g N-Methylbenzamid (1,5 Mol) in 1500 g wasserfreiem Toluol bei 65° C gelöst, 321,1 g Natriummethanolatlösung (25,25-%-ig, 1,5 Mol) zufließen lassen und wie nach Beispiel 6 verfahren. Anschließend tropfte man 259,2 g Methyldiethoxychlorsilan (97-%-ig, 1,49 Mol) langsam zu, hielt die Sumpftemperatur auf 70° C und rührte noch 3 h bei dieser Temperatur. Die Aufarbeitung erfolgte analog Beispiel 1 und man erhielt 388,5 g 97,5 % Ausbeute) einer hellen, schwach gelblichen öligen Flüssigkeit.
$^1$H-NMR (δ in ppm, bezogen auf TMS):

a = 0,20, b = 1,17, c = 2,93, d = 3,83, e = 7,37, f = 7,93

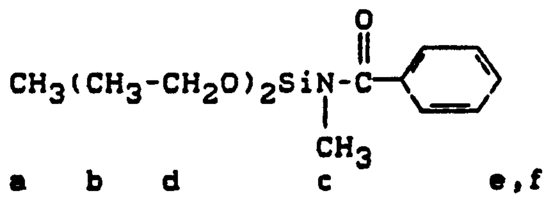

Die Vernetzer nach Beispiel 6 und 7 wurden in folgende Rezeptur eingesetzt:

| | |
|---|---|
| 45,2 Gew.-Teile | Hydroxylendgestopptes Polydimethylsiloxan, Viskosität ca. 50 000 mPas (25° C) |
| 19 Gew.-Teile | Nicht reaktives Polydimethylsiloxan, Viskosität ca. 1500 mPas (25° C) |
| 5,5 Gew.-Teile | ®Ti-Chelat-Verbindung |
| 5,0 Gew.-Teile | Vernetzer, nach Beispiel 6 oder 7 hergestellt |
| 20 Gew.-Teile | Kreide |
| 5,5 Gew.-Teile | Kieselsäure (BET 150 $m^2/g$) |
| 0,5 Gew.-Teile | Dibutylzinndilaurat |

Die so hergestellten Massen ergaben beim Aufstreichen auf eine Glasplatte an feuchter Luft einen weißen, vollständig durchgehärteten Dichtstoff.

**Beispiel 8** Di-(N-methylbenzamido)-dimethylsilan

In einer Rühr- und Destillationsapparatur nach Beispiel 1 wurden 405,5 g N-Methylbenzamid (3 Mol) in 2400 g wasserfreiem Toluol bei 65° C gelöst und 625,5 g Natriummethanolatlösung (25,9-%-ig, 3 Mol) zufließen lassen. Das Azeotrop wurde analog zu den Beispielen 6 und 7 unter reduziertem Druck abgenommen, bis methanolfreies Toluol überging. Danach tropfte man unter Einhaltung von 70°C Sumpftemperatur 192,4 g Dimethyldichlorsilan (99,9-%-ig, 1,49 Mol) zu (exotherme Reaktion, Kühlung!) und rührte noch 3 h bei dieser Temperatur. Nach dem Abkühlen wurde die Suspension wie in den vorangegangenen Beispielen aufgearbeitet. Man erhielt 472 g (97 % Ausbeute) einer nahezu farblosen, viskosen Flüssigkeit, die bei Raumtemperatur farblose Kristalle bildete (Fp. 54 - 56° C).
$^1$H-NMR (δ in ppm, bezogen auf TMS):

a = 0,53, b = 2,90, c = 7,37, d = 7,90

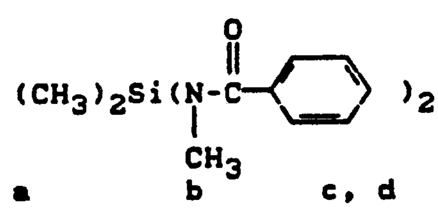

Von der so hergestellten Substanz wurde eine 50 Gew.-%-ige Lösung in Toluol/Butylacetat (60 : 40 Gew.-Teile) hergestellt und in folgende Rezeptur eingesetzt:

| | |
|---|---|
| 30 Gew.-Teile | Hydroxylendgestopptes Polydimethylsiloxan, Viskosität ca. 50 000 mPas (25° C) |
| 20 Gew.-Teile | Nicht reaktives Polydimethylsiloxan, Viskosität ca. 1500 mPas (25° C) |

| | |
|---|---|
| 4,5 Gew.-Teile | Kettenverlängerer, nach Beispiel 8 hergestellt, |
| 4,5 Gew.-Teile | Vernetzer, nach Beispiel 6 hergestellt, |
| 45 Gew.-Teile | Kreide |
| 0,05 Gew.-Teile | Dibutylzinndilaurat |

Ein an feuchter Luft hergestelltes Fell härtete vollständig durch und zeigte eine Bruchdehnung von ca. 900 %.

**Patentansprüche**

1. Verfahren zur Herstellung von Amidosilanen der allgemeinen Formel

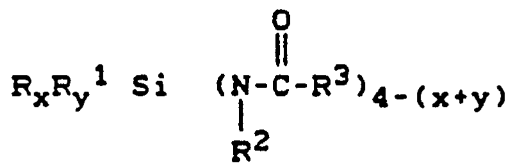

wobei
R ein Alkyl-, Cycloalkyl-, Alkenyl- oder Arylrestmit 1 - 18 C-Atome,
$R^1$ ein Alkoxyrest mit 1 - 18 C-Atomen
$R^2$ und $R^3$ unabhängig voneinander Alkylester mit 1 - 3 C-Atome, Arylreste oder $R^2$ und $R^3$ bilden zusammen einen Cyclus und
$x = 1, 2$ oder 3;
$y = 0, 1$ oder 2 und
$x + y \leqslant 3$,
durch Umsetzung von Suspensionen von Alkalisalzen organische, Amide der Formel

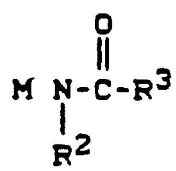

(M = Alkalimetallrest)
und Organosilanen des Typs

$R_xR_y{}^1\ SiX_{4-(x+y)}$ (X = Cl Br J Carboxylate x und y wie oben)

wobei die Umsetzung unter Ausschluß von Feuchtigkeit in inerten organischen Lösungsmitteln erfolgt, dadurch gekennzeichnet, daß die Alkalisalze der organischen Amide durch Umsetzung der entsprechenden Amid-Lösungen in inerten organischen Lösungsmitteln mit alkoholischen Alkalialkoholatlösungen hergestellt werden, und wobei der Alkohol aus dem Reaktionsgemisch quantitativ abdestilliert wird.

2. Verfahren nach Anspruch 1, dadurch gekennzeichnet, daß als inertes organisches Lösungsmittel Toluol verwendet wird.

3. Verfahren nach Anspruch 1 oder 2, dadurch gekennzeichnet, daß in der Alkalialkoholatlösung der dem Alkoholat korrespondierende Alkohol verwendet wird.

4. Verfahren nach einem der Ansprüche 1 bis 3, dadurch gekennzeichnet, daß als Alkoholatlösung methanolische Natriummethanolatlösung verwendet wird.

5. Verfahren nach einem der Ansprüche 1 bis 4, dadurch gekennzeichnet, daß die destillative Entfernung des Alkohols aus dem Reaktionsgemisch unter reduziertem Druck so durchgeführt wird, daß die Temperatur in der Destillationsblase zwischen 60 und 70°C liegt.

6. Verfahren nach einem der Ansprüche 1 bis 5, dadurch gekennzeichnet, daß die Umsetzung der alkoholfreien Suspensionen von Alkalisalzen organischer Amide mit den Organosilanen bevorzugt mit Organochlorsilanen erfolgt.

7. Verfahren nach Anspruch 6, dadurch gekennzeichnet, daß die Umsetzung der alkoholfreien Suspensionen von Alkalisalzen organischer Amide mit den Organochlorsilanen bei Temperaturen zwischen 60 und 80°C durchgeführt wird.

8. Verfahren nach einem der Ansprüche 1 bis 7, dadurch gekennzeichnet, daß die nach Umsetzung und Filtration in den inerten organischen Lösungsmitteln vorliegenden Amidosilane vom Lösungsmittel befreit werden und ohne zusätzliche Reinigungsverfahren vewendet werden.

**Claims**

1. A process for the production of amidosilanes corresponding to the following general formula

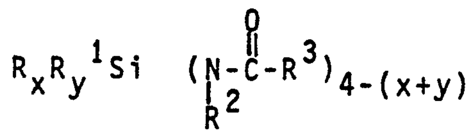

in which
R is an alkyl, cycloalkyl, alkenyl or aryl radical containing 1 to 18 C atoms,
$R^1$ is an alkoxy radical containing 1 to 18 C atoms,
$R^2$ and $R^3$ independently of one another represent alkyl esters containing 1 to 3 C atoms, aryl radicals or $R^2$ and $R^3$ together form a cycle and
x = 1, 2 or 3;
y = 0, 1 or 2 and
$x + y \leqslant 3$,
by reaction of suspensions of alkali salts of organic amides corresponding to the following formula

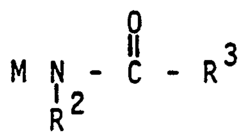

(M = alkali metal residue)
and organosilanes corresponding to the following formula
$R_xR_y^1\ SiX_{4\ (x+)}$ (X = Cl, Br, I, carboxylates, x and y as above)
the reaction being carried out in the absence of moisture in inert organic solvents, characterized in that the alkali salts of the organic amides are prepared by reaction of the corresponding amide solutions in inert organic solvents with alcoholic alkali alcoholate solutions, the alcohol being quantitatively distilled off from the reaction mixture.

2. A process as claimed in claim 1, characterized in that toluene is used as the inert organic solvent.

3. A process as claimed in claim 1 or 2, characterized in that the alcohol corresponding to the alcoholate is used in the alkali alcoholate solution.

4. A process as claimed in any of claims 1 to 3, characterized in that methanolic sodium methanolate solution is used as the alkali alcoholate solution.

5. A process as claimed in any of claims 1 to 4, characterized in that the removal of the alcohol from the reaction mixture by distillation is carried out under reduced pressure so that the temperature in the still is between 60 and 70°C.

6. A process as claimed in any of claims 1 to 5, characterized in that the reaction of the alcohol-free suspensions of alkali salts of organic amides with the organosilanes is preferably carried out with organochlorosilanes.

7. A process as claimed in claim 6, characterized in that the reaction of the alcohol-free suspensions of alkali salts of organic amides with the organochlorosilanes is carried out at temperatures of from 60 to 80°C.

8. A process as claimed in any of claims 1 to 7, characterized in that the amidosilanes present in the inert organic solvents after reaction and filtration are freed from the solvent and used without additional purification.

**Revendications**

1. Procédé de préparation d'amidosilanes de formule générale

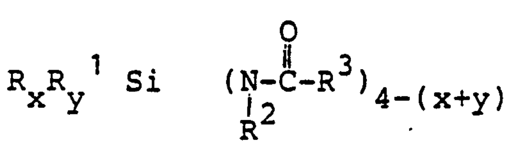

dans laquelle
R représente un radical alkyle, un radical cycloalkyle un radical alcényle ou un radical aryle, contenant 1 à 18 atomes de carbone,
$R^1$ représente un radical alcoxy contenant 1 à 18 atomes de carbone

$R^2$ et $R^3$ représentent chacun indépendamment l'un de l'autre un ester alkylique contenant 1 à 3 atomes de carbone, des radicaux aryle ou encore $R^2$ et $R^3$ forment un cycle, et

$x = 1, 2$ ou 3;

$y = 0, 1$ ou 2 et

$x + y \leq 3$,

par réaction de suspensions de sels alcalins et d'amides organiques de formule

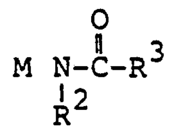

(M = radical d'un métal alcalin)

et d'organosilanes du type

$R_xR_y^1\ SiX_{4-(x+y)}$ (X = Cl,Br, I, carboxylate, x et y ont les significations définies ci-dessus)

la réaction ayant lieu à l'abri de l'humidité dans des solvants organiques inertes, caractérisé en ce qu'on prépare les sels alcalins des amides organiques par réaction des solutions correspondantes d'amides dans des solvants organiques inertes, avec des solutions alcooliques d'alcoolates alcalins, tandis que l'alcool est séparé quantitativement du mélange réactionnel par distillation.

2. Procédé selon la revendication 1, caractérisé en ce que, comme solvant organicue inerte, on utilise le toluène.

3. Procédé selon la revendication 1 ou 2, caractérisé en ce que, dans la solution d'alcoolates alcalins, on utilise l'alcool correspondant à l'alcoolate.

4. Procédé selon une des revendications 1 à 3, caractérisé en ce que, comme solution d'alcoolate on utilise une solution méthanolique de méthanolate de sodium.

5. Procédé selon une des revendications 1 à 4, caractérisé en ce que l'élimination de l'alcool hors du mélange réactionnel par distillation sous pression réduite est effectuée de telle sorte que la température régnant dans la cornue de distillation se situe entre 60 et 70° C.

6. Procédé selon une des revendications 1 à 5, caractérisé en ce que la réaction des suspensions sans alcool des sels alcalins d'amides organiques avec des organosilanes a lieu, de préférence, avec des organochlorosilanes.

7. Procédé selon la revendication 6, caractérisé en ce qu'on effectue la réaction des suspensions sans alcool de sels alcalins d'amides organiques avec les organochlorosilanes à des températures comprises entre 60 et 80° C.

8. Procédé selon une des revendications 1 à 7, caractérisé en ce que les amidosilanes présents dans les solvants organiques inertes après la réaction et la filtration sont libérés du solvant et sont utilisés sans procédé supplémentaire de purification.